# EUROPÄISCHE PATENTSCHRIFT

(11) **EP 3 147 160 B1**
(45) Veröffentlichungstag und Bekanntmachung des Hinweises auf die Patenterteilung: **28.11.2018**
(21) Anmeldenummer: 16001831.3
(22) Anmeldetag: 19.08.2016
(51) Int. Cl.: B60R 9/02, B62D 33/06

(54) **STAUFACHKONSTRUKTION FÜR EIN NUTZFAHRZEUG, INSBESONDERE FÜR EINEN LASTKRAFTWAGEN**
STORAGE STRUCTURE FOR A COMMERCIAL VEHICLE, IN PARTICULAR A HEAVY GOODS VEHICLE
STRUCTURE DE RANGEMENT POUR VEHICULE UTILITAIRE, NOTAMMENT POUR UN POIDS-LOURD

(30) Priorität: 26.09.2015 DE 102015012624
(43) Veröffentlichungstag der Anmeldung: 29.03.2017
(73) Patentinhaber: MAN Truck & Bus AG, 80995 München (DE)
(72) Erfinder: Gündogdu, Oguzhan, 85221 Dachau (DE); Siflinger, Markus, 85604 Zorneding (DE)
(74) Vertreter: v. Bezold & Partner Patentanwälte - PartG mbB

(56) Entgegenhaltungen:
- EP-A1- 0 226 000
- WO-A1-2010/076591
- DE-A1- 4 236 422
- DE-A1-102004 025 248
- DE-B3-102005 002 577
- JP-A- 2006 088 869
- JP-U- S6 428 345
- US-A1- 2011 255 943
- US-B1- 7 621 587

## Beschreibung

Die Erfindung betrifft eine Staufachkonstruktion für ein Nutzfahrzeug, insbesondere für einen Lastkraftwagen oder einen Omnibus.

Moderne Lastkraftwagen (LKW) weisen oftmals in der Fahrzeugkabine ein Staufach auf, das von außen zugänglich ist und beispielsweise zur Aufnahme von Proviant oder schwerem Gepäck dienen kann. Das Staufach ist hierbei in der Regel über eine Staufachklappe zugänglich, die in der Seitenwand der Fahrzeugkabine hinter der Tür und über dem Radkasten angeordnet ist. Nachteilig an dieser bekannten Staufachkonstruktion ist die relativ hohe Lage der Staufachklappe, was das Beladen und Entladen des Staufachs erschwert.

Zum allgemeinen technischen Hintergrund der Erfindung ist auch hinzuweisen auf DE 42 36 422 A1, US 2011/255 943 A1, DE 10 2005 002 577 B3, US 7 621 587 B1 und EP 0 226 000 A1.

Schließlich offenbart DE 10 2004 025 248 A1 eine Staufachkonstruktion gemäß dem Oberbegriff von Anspruch 1. Diese bekannte Staufachkonstruktion ist jedoch noch nicht vollständig befriedigend.

Der Erfindung liegt deshalb die Aufgabe zugrunde, eine entsprechend verbesserte Staufachkonstruktion zu schaffen.

Diese Aufgabe wird durch eine erfindungsgemäße Staufachkonstruktion gemäß dem Hauptanspruch gelöst.

Die erfindungsgemäße Staufachkonstruktion weist zunächst in Übereinstimmung mit dem Stand der Technik ein Staufach zur Aufnahme von Ladegut auf, wobei das Staufach im montierten Zustand der Staufachkonstruktion innerhalb des Nutzfahrzeugs (z. B. Lastkraftwagen, Omnibus) angeordnet und von außen zugänglich ist.

Darüber hinaus weist auch die erfindungsgemäße Staufachkonstruktion in Übereinstimmung mit dem Stand der Technik eine Staufachöffnung auf, um das Ladegut (z. B. Proviant, Gepäck) durch die Staufachöffnung hindurch in das Staufach einladen bzw. aus dem Staufach entladen zu können. Hierbei ist zu erwähnen, dass die Staufachöffnung in Übereinstimmung mit dem Stand der Technik im montierten Zustand der Staufachkonstruktion von außerhalb des Nutzfahrzeugs zugänglich ist.

Die Erfindung zeichnet sich nun gegenüber der eingangs beschriebenen bekannten Staufachkonstruktion durch eine zusätzliche Ladehilfe aus, um das Laden und Entladen des Staufachs zu erleichtern.

In einem bevorzugten Ausführungsbeispiel der Erfindung weist diese Ladehilfe einen Ladegutbehälter auf, wobei der Ladegutbehälter zwischen einer vollständig innerhalb des Staufachs befindlichen Betriebsstellung und einer mindestens teilweise außerhalb des Staufachs befindlichen Ladestellung beweglich ist, um das Laden und Entladen zu erleichtern. Während des Betriebs des Nutzfahrzeugs und auch im geparkten Zustand des Nutzfahrzeugs positioniert die Ladehilfe den Ladegutbehälter also vollständig innerhalb des Staufachs, so dass die Staufachöffnung geschlossen werden kann. Zum Beladen und Entladen des Staufachs positioniert die Ladehilfe den Ladegutbehälter dagegen in der Ladestellung, die sich mindestens teilweise außerhalb des Staufachs befindet, wodurch das Laden und Entladen wesentlich erleichtert wird.

In dem bevorzugten Ausführungsbeispiel der Erfindung weist die Ladehilfe eine Kinematik auf, welche den Ladegutbehälter zwischen der Betriebsstellung und der Ladestellung beweglich führt.

Vorzugsweise umfasst diese Kinematik eine Schienenkonstruktion, wobei der Ladegutbehälter auf der Schienenkonstruktion wahlweise in das Staufach hinein in die Betriebsstellung oder aus dem Staufach heraus in die Ladestellung gefahren werden kann, insbesondere in horizontaler Richtung.

Diese Schienenkonstruktion umfasst vorzugsweise ausziehbare Teleskopschienen, wie sie an sich aus dem Stand der Technik bekannt sind. Der Ladegutbehälter kann dann von den Teleskopschienen linear verschoben werden, um den Ladegutbehälter wahlweise in der Ladestellung außerhalb des Staufachs oder in der Betriebsstellung innerhalb des Staufachs zu positionieren.

In einer Variante der Erfindung mit einer solchen Schienenkonstruktion ist die komplette Schienenkonstruktion um eine horizontale Achse schwenkbar, um den Ladegutbehälter in der Ladestellung nach unten zu schwenken und dadurch den Zugriff auf den Ladegutbehälter zu erleichtern. Zu Beginn des Ladens bzw. Entladens wird der Ladegutbehälter also zunächst auf der Schienenkonstruktion aus der Betriebsstellung innerhalb des Staufachs nach außen verfahren. Anschließend kann dann die komplette Schienenkonstruktion mit dem Ladegutbehälter nach unten geschwenkt werden, um die Zugänglichkeit des Ladegutbehälters zu verbessern. Die Schwenkbewegung der Schienenkonstruktion erfolgt hierbei vorzugsweise um eine horizontale Achse, die vorzugsweise parallel zur Fahrzeuglängsrichtung ausgerichtet ist. Der Schwenkwinkel kann hierbei im Bereich von 10°-45° liegen, jedoch sind auch andere Schwenkwinkel möglich.

Weiterhin ist zu erwähnen, dass die Schwenkbewegung der Schienenkonstruktion manuell oder durch einen Antrieb erfolgen kann. Darüber hinaus besteht die Möglichkeit, dass die Schwenkbewegung durch einen Dämpfer mechanisch gedämpft wird.

Ferner ist zu erwähnen, dass die Kinematik für den Ladegutbehälter auch eine Schwenkbewegung, eine Drehbewegung, eine Vertikalbewegung, eine Horizontalbewegung oder eine Kombination von mehreren dieser Bewegungen ermöglichen kann. So ermöglicht die vorstehend erwähnte Schienenkonstruktion zunächst nur ein Herausfahren des Ladegutbehälters aus dem Staufach, damit der Ladegutbehälter dann leichter zugänglich ist. Allerdings befindet sich der Ladegutbehälter dann immer noch in einer relativ großen Höhe, was die Zugänglichkeit erschwert. Es ist deshalb vorteilhaft, wenn die Kinematik für den Ladegutbehälter auch eine vertikale Absenkung des Ladegutbehälters ermöglicht, so dass sich der Ladegutbehälter in der Ladestellung wesentlich tiefer befindet als in der Betriebsstellung. Die Kinematik ermöglicht also vorzugsweise auch eine Absenkung des Ladegutbehälters aus der relativ hohen Betriebsstellung in eine niedrigere Ladestellung, wodurch das Beladen bzw. Entladen weiter erleichtert wird.

Darüber hinaus weist die Ladehilfe eine Stapelmechanik auf, die zwei Ladegutbehälter wahlweise gestapelt übereinander oder seitlich nebeneinander positioniert. In der Betriebsstellung innerhalb des Staufachs befinden sich also die beiden Ladegutbehälter gestapelt übereinander. In der Ladestellung befinden sich die beiden Ladegutbehälter dagegen entstapelt seitlich nebeneinander, so dass beide Ladegutbehälter zugänglich sind und entladen bzw. beladen werden können. Die Stapelmechanik kann beispielsweise durch Schwenkarme realisiert werden, welche die beiden Ladegutbehälter miteinander verbinden. In diesem Zusammenhang ist zu erwähnen, dass die Erfindung hinsichtlich der Stapelhöhe nicht auf zwei stapelbare Ladegutbehälter beschränkt ist. Vielmehr besteht im Rahmen der Erfindung auch die Möglichkeit, eine größere Anzahl von Ladegutbehältern übereinander zu stapeln.

In dem bevorzugten Ausführungsbeispiel der Erfindung weist die Ladehilfe einen Einklemmschutz auf, der bei einer Bewegung der Ladehilfe ein Einklemmen von Gegenständen oder Personen verhindert. Ein derartiger Einklemmschutz ist an sich aus dem Stand der Technik bekannt und wird in ähnlicher Form beispielsweise bereits bei elektrischen Fensterhebern von Personenkraftwagen (PKW) eingesetzt.

Darüber hinaus kann die Ladehilfe eine Endlagensicherung aufweisen, welche den Ladegutbehälter in der Betriebsstellung und/oder in der Ladestellung arretiert. Diese Endlagensicherung kann manuell betätigt werden. Es besteht jedoch alternativ auch die Möglichkeit, dass die Endlagensicherung durch einen separaten Antrieb betätigt wird. Darüber hinaus kann die Endlagensicherung einen Sensor aufweisen, der den Arretierungszustand der Endlagensicherung anzeigt.

Weiterhin besteht im Rahmen der Erfindung die Möglichkeit, dass die Ladehilfe eine Anschlagdämpfung aufweist, die eine Anschlagbewegung des Ladegutbehälters beim Anschlagen an der Betriebsstellung und/oder beim Anschlagen an der Ladestellung mechanisch dämpft.

Ferner kann die Ladehilfe auch eine Bewegungsdämpfung aufweisen, die eine Bewegung des Ladegutbehälters zwischen der Betriebsstellung und der Ladestellung mechanisch dämpft.

In einer Variante der Erfindung ist das Staufach in ein Bettkastenmodul unterhalb einer Liegefläche integriert. Das Bettkastenmodul kann hierbei in der Fahrzeugkabine des Nutzfahrzeugs hinter den Sitzen angeordnet werden, um eine Liegefläche zu bieten. Das Staufach befindet sich dann unterhalb der Liegefläche, wobei das Staufach durch eine seitliche Staufachklappe von außen zugänglich ist. Darüber hinaus kann die Liegefläche des Bettkastenmoduls hochklappbar sein, um auch aus dem Innenraum der Fahrzeugkabine einen Zugriff auf das Staufach zu ermöglichen.

Hinsichtlich des Antriebs der vorstehend beschriebenen Ladehilfe bestehen im Rahmen der Erfindung verschiedene Möglichkeiten. So kann die Ladehilfe beispielsweise rein manuell betätigt werden. Es besteht jedoch alternativ auch die Möglichkeit, dass die Ladehilfe durch einen separaten Antrieb betätigt wird, wobei der Antrieb beispielsweise elektromotorisch, elektropneumatisch oder elektrohydraulisch arbeiten kann.

Ferner ist zu erwähnen, dass die Erfindung nicht nur Schutz beansprucht für die vorstehend beschriebene Staufachkonstruktion an sich. Vielmehr beansprucht die Erfindung auch Schutz für ein komplettes Nutzfahrzeug (z. B. Lastkraftwagen, Omnibus) mit einer solchen erfindungsgemäßen Staufachkonstruktion.

Bei einem solchen erfindungsgemäßen Nutzfahrzeug ist die Staufachkonstruktion vorzugsweise in einer Seitenwand einer Fahrzeugkabine des Nutzfahrzeugs von außen zugänglich angeordnet. Weiterhin ist zu erwähnen, dass sich die Staufachkonstruktion vorzugsweise über einem Radkasten des Nutzfahrzeugs befindet. Hierbei kann die Staufachkonstruktion unter einer Liegefläche angeordnet sein, wie bereits vorstehend kurz beschrieben wurde. In den bevorzugten Ausführungsbeispielen der Erfindung befindet sich die Staufachkonstruktion hinter dem Fahrersitz bzw. dem Beifahrersitz des Nutzfahrzeugs. Weiterhin ist zu erwähnen, dass die Staufachkonstruktion vorzugsweise eine Verschlussklappe aufweist, um die Staufachöffnung zu schließen, wobei die Verschlussklappe vorzugsweise schwenkbar ist, insbesondere um eine horizontale Achse am oberen Rand der Staufachöffnung. Ferner ist zu erwähnen, dass die Staufachöffnung in der Regel einen Öffnungsquerschnitt aufweist, der kleiner ist als der Innenquerschnitt des Staufachs. Schließlich ist noch zu bemerken, dass die Staufachöffnung in der Regel eine Ladekante aufweist, die mindestens 50 cm, 75 cm, 100 cm, 125 cm oder sogar mehr als 150 cm über der Reifenaufstandsfläche (d. h. Straßenniveau) des Nutzfahrzeugs liegt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine vereinfachte Perspektivansicht einer Fahrzeugkabine eines Lastkraftwagens mit einer nicht erfindungsgemäßen Staufachkonstruktion im geschlossenen Zustand,
- Figur 2: eine Abwandlung von Figur 1, wobei die Staufachkonstruktion geöffnet ist,
- Figur 3: eine schematische Querschnittsansicht durch die Fahrzeugkabine gemäß den Figuren 1 und 2, wobei ein Ladegutbehälter aus dem Staufach herausgefahren ist, um das Beladen bzw. Entladen zu erleichtern,
- Figur 4: eine Abwandlung von Figur 3, wobei der herausgefahrene Ladegutbehälter zusätzlich heruntergeschwenkt ist, um das Beladen bzw. Entladen zu erleichtern,
- Figur 5: eine Perspektivansicht eines Bettkastenmoduls mit einer nicht erfindungsgemäßen Staufachkonstruktion,
- Figuren 6A-6D: mehrere Perspektivansichten einer nicht erfindungsgemäßen Staufachkonstruktion mit Teleskopschienen und einer Schwenkkinematik in verschiedenen Phasen zwischen einer Betriebsstellung und einer Ladestellung,
- Figur 7A: eine Perspektivansicht eines anderen Ausführungsbeispiels einer erfindungsgemäßen Staufachkonstruktion mit einer Stapelmechanik, wobei die Staufachkonstruktion in das Staufach eingeschoben ist,
- Figur 7B: die Staufachkonstruktion gemäß Figur 7A in einer Ladestellung außerhalb des Staufachs,
- Figur 8A-8E: verschiedene Perspektivansichten der Staufachkonstruktion aus den Figuren 7A und 7B in verschiedenen Zuständen.

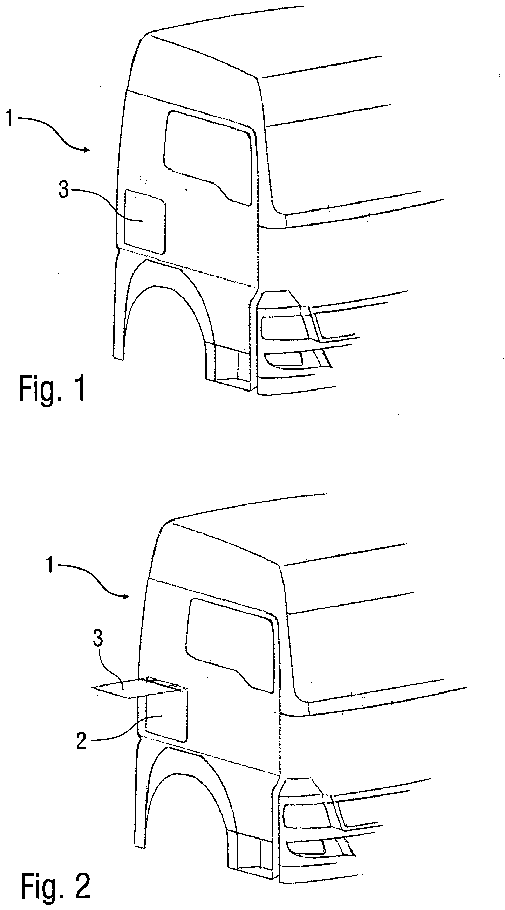

Die Figuren 1-4 zeigen verschiedene Ansichten einer Fahrzeugkabine 1 eines Lastkraftwagens (LKW) mit einer nicht erfindungsgemäßen Staufachkonstruktion.

Die erfindungsgemäße Staufachkonstruktion ist hierbei von außerhalb der Fahrzeugkabine 1 zugänglich und ermöglicht beispielsweise das Beladen mit Proviant oder schwerem Gepäck.

Hierzu befindet sich in der Seitenwand der Fahrzeugkabine 1 hinter der Beifahrertür und oberhalb des Radkastens ein Staufach 2, das durch eine schwenkbare Staufachklappe 3 verschlossen werden kann.

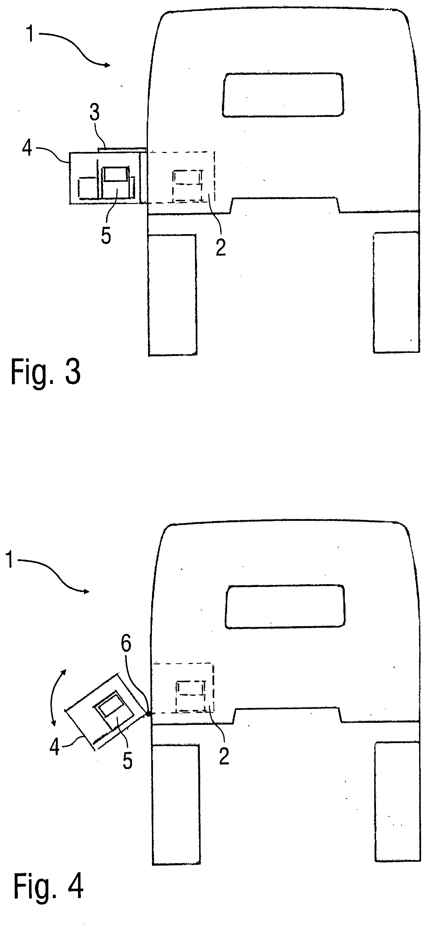

Problematisch hierbei ist die Tatsache, dass sich das Staufach 2 relativ weit oberhalb des Straßenniveaus befindet, was das Beladen bzw. Entladen des Staufachs 2 erschwert. Zur Lösung dieses Problems weist die erfindungsgemäße Staufachkonstruktion eine Ladehilfe auf. Die Ladehilfe umfasst einen Ladegutbehälter 4 zur Aufnahme von Ladegut (z. B. Proviant, Gepäck), wobei der Ladegutbehälter 4 von der Ladehilfe zwischen einer innerhalb des Staufachs 2 befindlichen Betriebsstellung und einer außerhalb des Staufachs 2 befindlichen Ladestellung beweglich ist. Figur 4 zeigt hierbei die Position des Ladegutbehälters 4 in der Ladestellung, wohingegen der Ladegutbehälter 4 in den Figuren 1 und 2 in der Betriebsstellung innerhalb des Staufachs 2 angeordnet und deshalb nicht sichtbar ist.

Die Ladehilfe ermöglicht hierbei zwei verschiedene Bewegungen des Ladegutbehälters 4 zwischen der Ladestellung und der Betriebsstellung.

Figur 3 zeigt zunächst, dass der Ladegutbehälter 4 in einer horizontalen Richtung aus dem Staufach 2 heraus bzw. in das Staufach 2 hinein geschoben werden kann.

Figur 4 zeigt zusätzlich, dass der Ladegutbehälter 4 im herausgezogenen Zustand um eine horizontale Achse 6 nach unten schwenkbar ist, wobei der Ladegutbehälter 4 im heruntergeschwenkten Zustand leichter zugänglich ist.

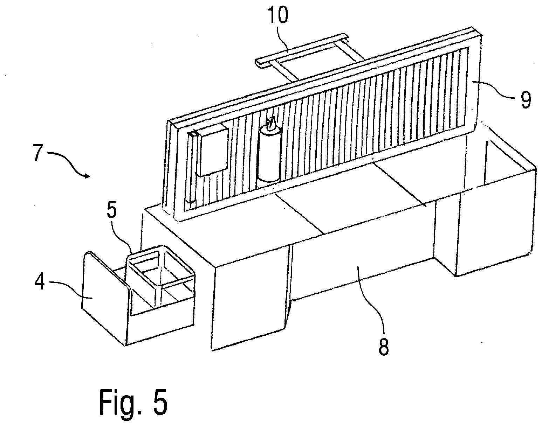

Figur 5 zeigt eine Perspektivansicht eines alternativen Ausführungsbeispiels einer nicht erfindungsgemäßen Staufachkonstruktion, die in ein Bettkastenmodul 7 integriert ist. Dieses Ausführungsbeispiel stimmt teilweise mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Das Bettkastenmodul 7 besteht im Wesentlichen aus einem Unterteil 8 und einer Liegefläche 9, wobei die Liegefläche 9 heraufgeklappt werden kann, wie in der Zeichnung dargestellt ist.

An der Vorderseite der Liegefläche 9 befindet sich ein Griff 10, der zwei Funktionen hat. Zum einen ermöglicht der Griff 10 ein Heraufklappen der Liegefläche 9. Zum anderen soll der Griff 10 aber auch verhindern, dass eine Person auf der Liegefläche 9 versehentlich von der Liegefläche 9 herunterrollt.

In dem Unterteil 8 des Bettkastenmoduls 7 befindet sich der Ladegutbehälter 4 mit dem darin befindlichen Ladegut 5, wobei der Ladegutbehälter 4 in der bereits vorstehend beschriebenen Weise aus dem Bettkastenmodul 7 herausgezogen werden kann. Das Bettkastenmodul 7 wird also so in der Fahrzeugkabine 1 hinter den Sitzen angebracht, dass der Ladegutbehälter 4 durch die Öffnung des Staufachs 2 nach außen herausgezogen werden kann.

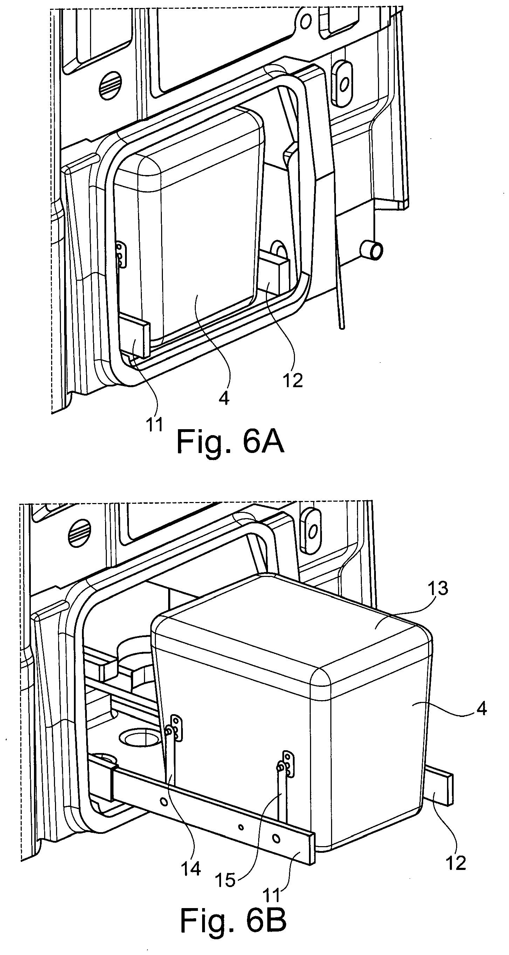

Die Figuren 6A-6D zeigen Perspektivansichten von verschiedenen Zuständen eines alternativen Ausführungsbeispiels einer nicht erfindungsgemäßen Staufachkonstruktion. Dieses alternative Ausführungsbeispiel stimmt teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Ladehilfe Teleskopschienen 11, 12 aufweist, die den Ladegutbehälter 4 tragen, so dass der Ladegutbehälter 4 auf den Teleskopschienen 11, 12 in horizontaler Richtung seitlich aus dem Staufach 2 so herausgefahren werden kann.

Weiterhin ist zu erwähnen, dass der Ladegutbehälter 4 einen schwenkbaren Deckel 13 aufweist.

Die Ladehilfe mit den Teleskopschienen 11, 12 ermöglicht hierbei nicht nur eine lineare Verschiebebewegung des Ladegutbehälters 4 in horizontaler Richtung. Darüber hinaus ermöglicht die Ladehilfe auch ein vertikales Absenken des Ladegutbehälters 4, um die Zugänglichkeit des Ladegutbehälters 4 beim Laden bzw. Entladen zu verbessern. Hierzu weist die Ladehilfe mehrere Schwenkarme 14, 15 auf. Einerseits sind die Schwenkarme 14, 15 an der Teleskopschiene 11 schwenkbar angebracht. Andererseits sind die Schwenkarme 14, 15 an der Seitenwand des Ladegutbehälters 4 schwenkbar angebracht. Ein Schwenken der Schwenkarme 14, 15 führt also zu einer entsprechenden Schwenkbewegung des Ladegutbehälters 4 und einer entsprechenden Anhebung bzw. Absenkung des Ladegutbehälters.

Figur 6A zeigt hierbei die Betriebsstellung des Ladegutbehälters 4, der sich in der Betriebsstellung vollständig innerhalb des Staufachs 2 befindet.

Figur 6B zeigt dagegen eine Zwischenstellung, in der der Ladegutbehälter 4 auf den Teleskopschienen 11, 12 vollständig aus dem Staufach 2 herausgezogen ist.

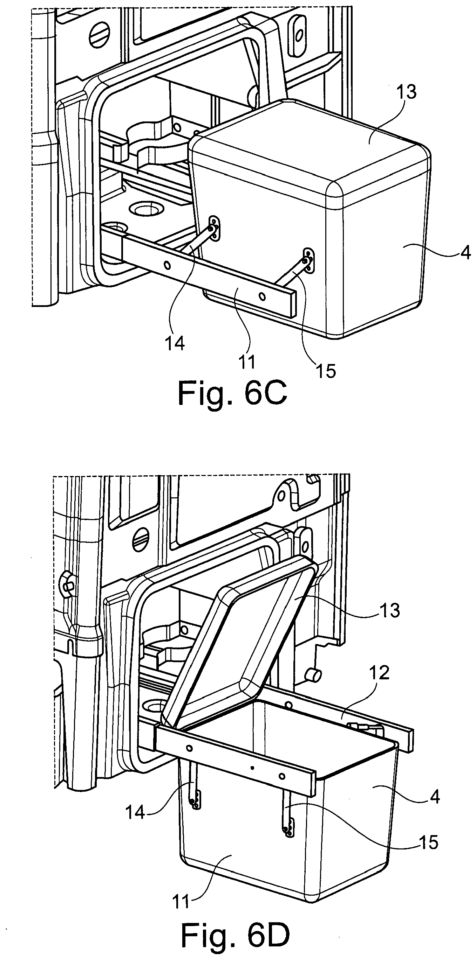

Figur 6C zeigt eine weitere Zwischenstellung, in welcher der herausgezogene Ladegutbehälter 4 mittels der Schwenkarme 14, 15 bereits teilweise heruntergeschwenkt ist.

Figur 6D zeigt schließlich die Ladestellung, in welcher der herausgezogene Ladegutbehälter 4 mittels der Schwenkarme 14, 15 vollständig abgesenkt ist, was bei dem geöffneten Deckel 13 die Zugänglichkeit wesentlich erleichtert.

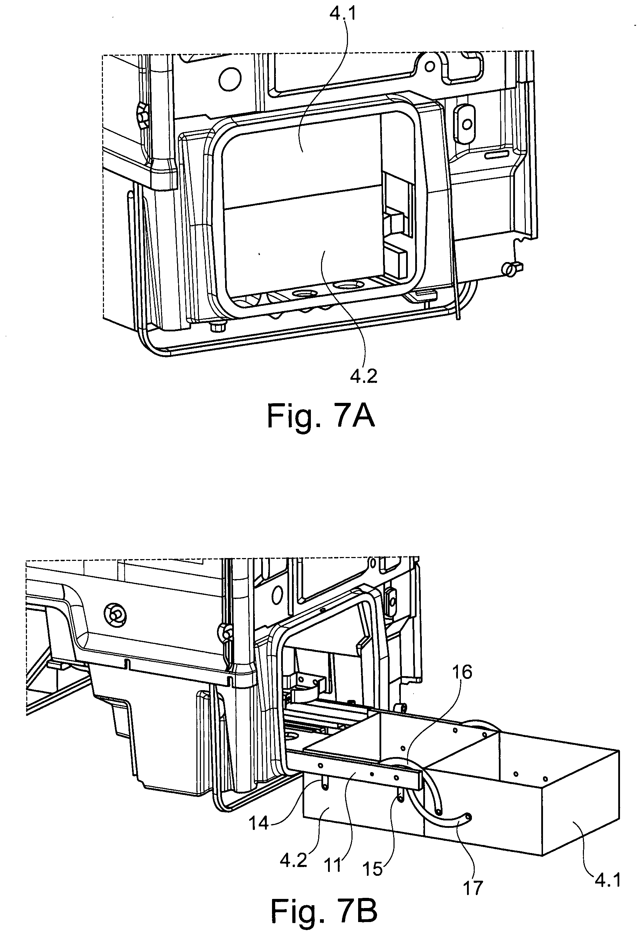

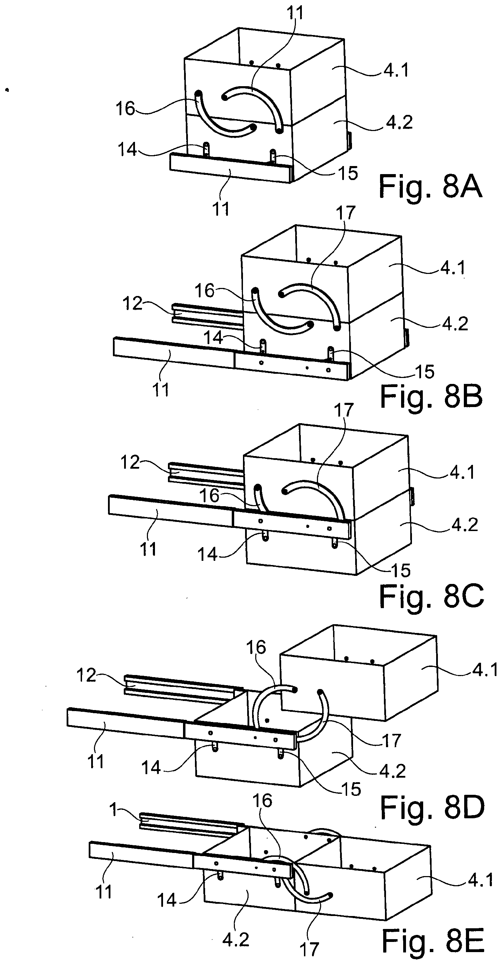

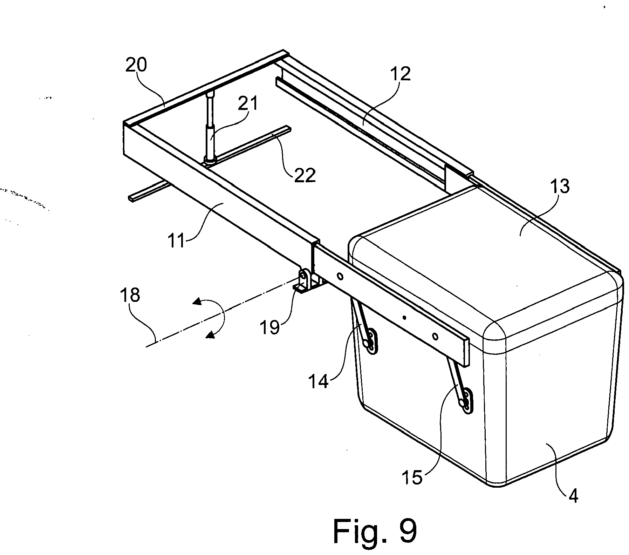

Die Figuren 7A-7B und die Figuren 8A-8E zeigen verschiedene Ansichten eines alternativen Ausführungsbeispiels einer erfindungsgemäßen Staufachkonstruktion. Diese Staufachkonstruktion stimmt teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht zunächst darin, dass die Staufachkonstruktion zwei Ladegutbehälter 4.1, 4.2 aufweist, die wahlweise gestapelt übereinander oder seitlich nebeneinander angeordnet werden können. Hierzu weist die Ladehilfe weitere Schwenkarme 16, 17 auf, die beiderseits der beiden Ladegutbehälter 4.1, 4.2 jeweils paarweise angeordnet sind. Die beiden Schwenkarme 16, 17 verbinden hierbei die beiden Ladegutbehälter 4.1, 4.2 und ermöglichen wahlweise eine gestapelte Anordnung der beiden Ladegutbehälter 4.1, 4.2 (vgl. Fig. 7A, Fig. 8A-8C) oder eine seitlich nebeneinander liegende Anordnung der beiden Ladegutbehälter 4.1, 4.2 (vgl. Fig. 7B, Fig. 8E). Die Schwenkarme 16, 17 bilden also eine Stapelmechanik.

Die Figuren 8A-8E zeigen hierbei verschiedene, aufeinander folgende Zustände der Staufachkonstruktion ausgehend von der Betriebsstellung gemäß Figur 8A bis zu der Ladestellung gemäß Figur 8E.

### Bezugszeichenliste

- 1: Fahrzeugkabine
- 2: Staufach
- 3: Staufachklappe
- 4, 4.1, 4.2: Ladegutbehälter
- 5: Ladegut
- 6: Schwenkachse
- 7: Bettkastenmodul
- 8: Unterteil des Bettkastenmoduls
- 9: Liegefläche des Bettkastenmoduls
- 10: Griff der Liegefläche
- 11, 12: Teleskopschienen
- 13: Deckel des Ladegutbehälters
- 14, 15: Schwenkarme zum Anheben und Absenken des Ladegutbehälters
- 16, 17: Schwenkarme zum Stapeln und Entstapeln der Ladegutbehälter

## Patentansprüche

1. Staufachkonstruktion für ein Nutzfahrzeug, insbesondere für einen Lastkraftwagen oder einen Omnibus, mit
a) einem Staufach (2) zur Aufnahme von Ladegut (5), wobei das Staufach (2) im montierten Zustand der Staufachkonstruktion innerhalb des Nutzfahrzeugs angeordnet und von außen zugänglich ist, und
b) einer Staufachöffnung zum Entladen und Beladen des Staufachs (2) mit dem Ladegut (5), wobei die Staufachöffnung im montierten Zustand der Staufachkonstruktion von außerhalb des Nutzfahrzeugs zugänglich ist,
c) einer Ladehilfe (4-22) zur Erleichterung des Ladens und Entladens des Staufachs (2),
**dadurch gekennzeichnet,**
d) dass die Ladehilfe (4-22) eine Stapelmechanik (16, 17) aufweist, die zwei Ladegutbehälter (4.1, 4.2) wahlweise gestapelt übereinander oder seitlich nebeneinander positioniert, und
e) dass die Ladehilfe (4-22) die Ladegutbehälter (4.1, 4.2) wahlweise in einer Betriebsstellung gestapelt innerhalb des Staufachs (2) oder in einer Ladestellung entstapelt außerhalb des Staufachs (2) positioniert.

2. Staufachkonstruktion nach Anspruch 1, **dadurch gekennzeichnet, dass** die Ladehilfe (4-22) eine Kinematik (11, 12; 19) aufweist, welche den Ladegutbehälter (4; 4.1, 4.2) zwischen der Betriebsstellung und der Ladestellung beweglich führt.

3. Staufachkonstruktion nach Anspruch 2, **dadurch gekennzeichnet, dass** die Kinematik eine Schienenkonstruktion (11, 12) aufweist, insbesondere mit ausziehbaren Teleskopschienen (11, 12), wobei der Ladegutbehälter (4; 4.1, 4.2) auf der Schienenkonstruktion (11, 12) wahlweise in das Staufach (2) hinein in die Betriebsstellung oder aus dem Staufach (2) heraus in die Ladestellung gefahren werden kann, insbesondere in horizontaler Richtung.

4. Staufachkonstruktion nach Anspruch 3, **dadurch gekennzeichnet, dass** die Schienenkonstruktion um eine horizontale Achse (6; 18) schwenkbar ist, um den Ladegutbehälter (4) in der Ladestellung nach unten zu schwenken und dadurch den Zugriff auf den Ladegutbehälter (4) zu erleichtern

5. Staufachkonstruktion nach einem der Ansprüche 2 bis 4, **dadurch gekennzeichnet, dass** die Kinematik dem Ladegutbehälter (4; 4.1, 4.2) eine Schwenkbewegung, eine Drehbewegung, eine Vertikalbewegung, eine Horizontalbewegung oder eine Kombination von mehreren dieser Bewegungen ermöglicht.

6. Staufachkonstruktion nach einem der vorhergehenden Ansprüche, **dadurch gekennzeichnet, dass** die Ladehilfe einen Einklemmschutz aufweist, der bei einer Bewegung der Ladehilfe ein Einklemmen von Gegenständen oder Personen verhindert.

7. Staufachkonstruktion nach einem der Ansprüche 2 bis 6, **dadurch gekennzeichnet, dass** die Ladehilfe eine Endlagensicherung aufweist, welche den Ladegutbehälter in der Betriebsstellung und/oder in der Ladestellung arretiert.

8. Staufachkonstruktion nach einem der Ansprüche 2 bis 7,
**dadurch gekennzeichnet,**
a) **dass** die Ladehilfe eine Anschlagdämpfung aufweist, die eine Anschlagbewegung des Ladegutbehälters (4; 4.1, 4.2) beim Anschlagen an der Betriebsstellung und/oder beim Anschlagen an der Ladestellung dämpft, und/oder
b) **dass** die Ladehilfe eine Bewegungsdämpfung aufweist, die eine Bewegung des Ladegutbehälters (4; 4.1, 4.2) zwischen der Betriebsstellung und der Ladestellung dämpft.

9. Staufachkonstruktion nach einem der vorhergehenden Ansprüche, **dadurch gekennzeichnet, dass** das Staufach (2) in ein Bettkastenmodul (7) unterhalb einer Liegefläche (9) integriert ist.

10. Staufachkonstruktion nach Anspruch 9, **dadurch gekennzeichnet, dass** die Liegefläche (9) des Bettkastenmoduls (7) hochklappbar ist und im hochgeklappten Zustand einen Zugriff auf das Staufach (2) ermöglicht.

11. Staufachkonstruktion nach einem der vorhergehenden Ansprüche, **gekennzeichnet durch** einen Antrieb zum Bewegen der Ladehilfe, insbesondere einen manuellen, elektromotorischen, elektropneumatischen oder elektrohydraulischen Antrieb.

12. Nutzfahrzeug, insbesondere Lastkraftwagen oder Omnibus, mit einer Staufachkonstruktion nach einem der vorhergehenden Ansprüche.

13. Nutzfahrzeug nach Anspruch 12, **dadurch gekennzeichnet,**
a) **dass** die Staufachkonstruktion in einer Seitenwand einer Fahrzeugkabine (1) des Nutzfahrzeugs von außen zugänglich angeordnet ist, und/oder
b) **dass** die Staufachkonstruktion über einem Radkasten des Nutzfahrzeugs angeordnet ist, und/oder
c) **dass** die Staufachkonstruktion unter einer Liegefläche (9) angeordnet ist, und/oder
d) **dass** die Staufachkonstruktion hinter Fahrersitz und/oder Beifahrersitz angeordnet ist, und/oder
e) **dass** die Staufachkonstruktion eine Staufachklappe (3) aufweist, um die Staufachöffnung zu schließen, und/oder
f) **dass** die Staufachklappe (3) schwenkbar ist, insbesondere um eine horizontale Achse am oberen Rand der Staufachöffnung, und/oder
g) **dass** die Staufachöffnung einen Öffnungsquerschnitt aufweist, der kleiner ist als der Innenquerschnitt des Staufachs (2), und/oder
h) **dass** die Staufachöffnung eine Ladekante aufweist, die mindestens 50cm, 75cm, 100cm, 125cm oder 150cm über der Reifenaufstandsfläche des Nutzfahrzeugs liegt.

## Claims

1. Storage compartment construction for a commercial vehicle, in particular for a lorry or an omnibus, having
a) a storage compartment (2) for receiving freight (5), the storage compartment (2) being arranged within the commercial vehicle in the mounted state of the storage compartment construction and being accessible from the outside, and
b) a storage compartment opening for unloading and loading the storage compartment (2) with the freight (5), the storage compartment opening being accessible from outside the commercial vehicle in the mounted state of the storage compartment construction,
c) a loading aid (4-22) for facilitating loading and unloading of the storage compartment (2),
**characterized**
d) in that the loading aid (4-22) has a stacking mechanism (16, 17) which positions two freight containers (4.1, 4.2) selectively in a stacked position above one another or laterally next to one another, and
e) in that the loading aid (4-22) positions the freight containers (4.1, 4.2) selectively in an operating position in a stacked position within the storage compartment (2) or in a loading position in an unstacked position outside the storage compartment (2).

2. Storage compartment construction according to Claim 1, **characterized in that** the loading aid (4-22) has a kinematic system (11, 12; 19) which guides the freight container (4; 4.1, 4.2) movably between the operating position and the loading position.

3. Storage compartment construction according to Claim 2, **characterized in that** the kinematic system has a rail construction (11, 12), in particular with extendable telescopic rails (11, 12), it being possible for the freight container (4; 4.1, 4.2) to be moved on the rail construction (11, 12) selectively into the storage compartment (2) into the operating position or out of the storage compartment (2) into the loading position, in particular in the horizontal direction.

4. Storage compartment construction according to Claim 3, **characterized in that** the rail construction can be pivoted about a horizontal axis (6; 18), in order to pivot the freight container (4) downwards in the loading position and to facilitate the access to the freight container (4) as a result.

5. Storage compartment construction according to one of Claims 2 to 4, **characterized in that** the kinematic system makes a pivoting movement, a rotational movement, a vertical movement, a horizontal movement or a combination of a plurality of the said movements possible for the freight container (4; 4.1, 4.2).

6. Storage compartment construction according to one of the preceding claims, **characterized in that** the loading aid has an anti-pinch protection means which prevents pinching of objects or persons during a movement of the loading aid.

7. Storage compartment construction according to one of Claims 2 to 6, **characterized in that** the loading aid has an end position securing means which locks the freight container in the operating position and/or in the loading position.

8. Storage compartment construction according to one of Claims 2 to 7,
**characterized**
a) **in that** the loading aid has a stop damping means which damps a stop movement of the freight container (4; 4.1, 4.2) when coming into contact in the operating position and/or when coming into contact in the loading position, and/or
b) **in that** the loading aid has a movement damping means which damps a movement of the freight container (4; 4.1, 4.2) between the operating position and the loading position.

9. Storage compartment construction according to one of the preceding claims, **characterized in that** the storage compartment (2) is integrated into a bed box module (7) below a bed surface (9).

10. Storage compartment construction according to Claim 9, **characterized in that** the bed surface (9) of the bed box module (7) can be folded up and makes access to the storage compartment (2) possible in the folded-up state.

11. Storage compartment construction according to one of the preceding claims, **characterized by** a drive for moving the loading aid, in particular a manual, electric motor, electropneumatic or electrohydraulic drive.

12. Commercial vehicle, in particular a lorry or an omnibus, having a storage compartment construction according to one of the preceding claims.

13. Commercial vehicle according to Claim 12, **characterized**
a) **in that** the storage compartment construction is arranged in a side wall of a vehicle cab (1) of the commercial vehicle such that it can be accessed from the outside, and/or
b) **in that** the storage compartment construction is arranged above a wheel arch of the commercial vehicle, and/or
c) **in that** the storage compartment construction is arranged below a bed surface (9), and/or
d) **in that** the storage compartment construction is arranged behind the driver's seat and/or front passenger's seat, and/or
e) **in that** the storage compartment construction has a storage compartment flap (3), in order to close the storage compartment opening, and/or
f) **in that** the storage compartment flap (3) can be pivoted, in particular about a horizontal axis at the upper edge of the storage compartment opening, and/or
g) **in that** the storage compartment opening has an opening cross section which is smaller than the inner cross section of the storage compartment (2), and/or
h) **in that** the storage compartment opening has a loading sill which lies at least 50 cm, 75 cm, 100 cm, 125 cm or 150 cm above the tyre contact area of the commercial vehicle.

## Revendications

1. Construction de compartiment de rangement pour un véhicule utilitaire, en particulier pour un poids-lourd ou un omnibus, comprenant
a) un compartiment de rangement (2) destiné à recevoir un chargement (5), le compartiment de rangement (2), dans l'état monté de la construction de compartiment de rangement, étant disposé à l'intérieur du véhicule utilitaire et étant accessible depuis l'extérieur, et
b) une ouverture de compartiment de rangement pour le déchargement et le chargement du compartiment de rangement (2) avec le chargement (5), l'ouverture de compartiment de rangement, dans l'état monté de la construction de compartiment de rangement, étant accessible depuis l'extérieur du véhicule utilitaire,
c) un auxiliaire de chargement (4-22) pour faciliter le chargement et le déchargement du compartiment de rangement (2),
**caractérisée**
**en ce que** d) l'auxiliaire de chargement (4-22) présente un mécanisme d'empilement (16, 17) qui positionne deux récipients de chargement (4.1, 4.2) de manière empilée sélectivement l'un sur l'autre ou latéralement l'un à côté de l'autre, et
e) en ce que l'auxiliaire de chargement (4-22) positionne les récipients de chargement (4.1, 4.2) de manière sélective dans une position fonctionnelle de manière empilée à l'intérieur du compartiment de rangement (2) ou dans une position de chargement de manière désempilée à l'extérieur du compartiment de rangement (2).

2. Construction de compartiment de rangement selon la revendication 1, **caractérisée en ce que** l'auxiliaire de chargement (4-22) présente une cinématique (11, 12 ; 19) qui guide de manière déplaçable le récipient pour chargement (4 ; 4.1, 4.2) entre la position fonctionnelle et la position de chargement.

3. Construction de compartiment de rangement selon la revendication 2, **caractérisée en ce que** la cinématique présente une construction de rails (11, 12), en particulier avec des rails télescopiques déployables (11, 12), le récipient pour chargement (4 ; 4.1, 4.2) pouvant être guidé sur la construction de rails (11, 12) de manière sélective dans le compartiment de rangement (2) dans la position fonctionnelle ou hors du compartiment de rangement (2) dans la position de chargement, en particulier dans la direction horizontale.

4. Construction de compartiment de rangement selon la revendication 3, **caractérisée en ce que** la construction de rails peut pivoter autour d'un axe horizontal (6 ; 18) afin de faire pivoter vers le bas le récipient pour chargement (4) dans la position de chargement et de faciliter ainsi l'accès au récipient pour chargement (4).

5. Construction de compartiment de rangement selon l'une quelconque des revendications 2 à 4, **caractérisée en ce que** la cinématique du récipient pour chargement (4 ; 4.1, 4.2) permet un mouvement de pivotement, un mouvement de rotation, un mouvement vertical, un mouvement horizontal, ou une combinaison de plusieurs de ces mouvements.

6. Construction de compartiment de rangement selon l'une quelconque des revendications précédentes, **caractérisée en ce que** l'auxiliaire de chargement présente une protection contre le coincement qui, dans le cas d'un déplacement de l'auxiliaire de chargement, empêche un coincement d'objets ou de personnes.

7. Construction de compartiment de rangement selon l'une quelconque des revendications 2 à 6, **caractérisée en ce que** l'auxiliaire de chargement présente une protection en position de fin de course qui bloque le récipient pour chargement dans la position fonctionnelle et/ou dans la position de chargement.

8. Construction de compartiment de rangement selon l'une quelconque des revendications 2 à 7, **caractérisée**
a) **en ce que** l'auxiliaire de chargement présente un amortissement de butée qui amortit un mouvement de butée du récipient pour chargement (4 ; 4.1, 4.2) lors de la venue en butée contre la position fonctionnelle et/ou de la venue en butée contre la position de chargement, et/ou
b) **en ce que** l'auxiliaire de chargement présente un amortissement de mouvement qui amortit un mouvement du récipient pour chargement (4 ; 4.1, 4.2) entre la position fonctionnelle et la position de chargement.

9. Construction de compartiment de rangement selon l'une quelconque des revendications précédentes, **caractérisée en ce que** le compartiment de rangement (2) est intégré dans un module de caisse de lit (7) sous une surface de couchage (9).

10. Construction de compartiment de rangement selon la revendication 9, **caractérisée en ce que** la surface de couchage (9) du module de caisse de lit (7) peut être rabattue vers le haut et, dans l'état rabattu vers le haut, permet un accès au compartiment de rangement (2).

11. Construction de compartiment de rangement selon l'une quelconque des revendications précédentes, **caractérisée par** un entraînement pour déplacer l'auxiliaire de chargement, en particulier un entraînement manuel, un moteur électrique, électropneumatique ou électrohydraulique.

12. Véhicule utilitaire, en particulier poids-lourds ou omnibus, comprenant une construction de compartiment de rangement selon l'une quelconque des revendications précédentes.

13. Véhicule utilitaire selon la revendication 12, **caractérisé**
a) **en ce que** la construction de compartiment de rangement est disposée de manière accessible depuis l'extérieur dans une paroi latérale d'une cabine du véhicule (1) de véhicule utilitaire et/ou
b) **en ce que** la construction de compartiment de rangement est disposée au-dessus d'un passage de roue du véhicule utilitaire, et/ou
c) **en ce que** la construction de compartiment de rangement est disposée sous une surface de couchage (9), et/ou
d) **en ce que** la construction de compartiment de rangement est disposée derrière le siège du conducteur et/ou le siège du passager, et/ou
e) **en ce que** la construction de compartiment de rangement présente un volet de compartiment de rangement (3) afin de fermer l'ouverture de compartiment de rangement, et/ou
f) **en ce que** le volet de compartiment de rangement (3) peut pivoter, en particulier autour d'un axe horizontal au niveau du bord supérieur de l'ouverture de compartiment de rangement, et/ou
g) **en ce que** l'ouverture du compartiment de rangement présente une section transversale d'ouverture qui est inférieure à la section transversale intérieure du compartiment de rangement (2), et/ou
h) **en ce que** l'ouverture du compartiment de rangement présente une arête de chargement qui est située à au moins 50 cm, 75 cm, 100 cm, 125 cm ou 150 cm au-dessus de la surface d'appui des pneus au sol du véhicule utilitaire.
